# EUROPEAN PATENT APPLICATION

(11) **EP 0 635 561 A2**
(43) Date of publication of application: **25.01.1995**
(21) Application number: 94302872.0
(22) Date of filing: 22.04.1994
(51) Int. Cl.: C10M 145/14, C08F 220/18, C10N 30/02

(54) **Copolymer useful as viscosity index improving additive for hydraulic fluid**

(30) Priority: 23.07.1993 US 96753
(71) Applicant: ROHM AND HAAS COMPANY, Philadelphia, Pennsylvania 19106-2399 (US)
(72) Inventor: Gore, Robert Howard, Southampton, Pennsylvania 18966 (US); Stevens, Bridget Marie, Horsham, Pennsylvania 19044 (US)
(74) Representative: Tanner, James Percival

(57) **Abstract**

The present invention provides a polymeric material, useful as a viscosity index improving additive for hydraulic fluids, and comprising alkyl ester repeating units of the structural formula: 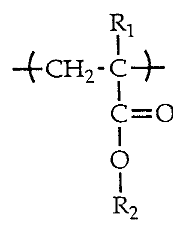
wherein each occurrence of R₁ is independently H or methyl and each occurrence of R₂ is independently selected from the group consisting of (C₈-C₁₅)alkyl.

## Description

The present invention is concerned with certain poly(alkyl (meth)acrylates) useful as viscosity index improving additives for hydraulic fluids.

Hydraulic systems, e.g., systems wherein the operation of high speed, high pressure hydraulic pumps is subject to wide temperature variations, can impose severe demands on hydraulic fluids.

Additives for improving the properties, e.g., the viscosity index, of hydrocarbon base oils used in hydraulic fluids are known. Viscosity index improving additives reduce the influence of temperature changes on fluid viscosity. GB-A-1,172,697 discloses viscosity index improving copolymers of up to 50 weight % "readily polymerizable" monoethylenically unsaturated monomers, e.g., styrene, t-butyl methacrylate, methyl methacrylate and mixtures thereof, with at least 50 weight % "difficulty polymerizable" monoethylenically unsaturated monomers, e.g., lauryl methacrylate. US-A-5,112,509 discloses a method for making a poly(methyl methacrylate-co-lauryl methacrylate) copolymer for use in hydraulic fluids and lubricating oil compositions as a viscosity index improver. The process includes heating a reaction mixture of the monomers and a polymerisation initiator to a temperature from 93.3°C to 148.9°C (200°F to 300°F).

Paraffinic oils have a tendency to gel at low temperatures due to ordering of wax molecules in the oil. In some hydraulic systems, e.g., mobile equipment, startup temperatures may be well below -17.8°C (0°F) and it is critically important that the hydraulic fluid in the system remains fluid at the low temperatures encountered. High performance hydraulic fluid compositions for applications involving low startup temperatures typically include a pour point depressing additive, in addition to a viscosity index improving additive, to improve the low temperature fluidity of the hydraulic fluid.

Along with their several advantageous effects, known poly(alkyl (meth)acrylate) viscosity index improvers can impart at least one undesirable property to the hydraulic fluids in which they are used. Hydraulic fluids formulated with such additives have shown a tendency to form emulsions with ambient moisture during use. The performance of the emulsified fluids is compromised with respect to, e.g., lubricity, corrosion resistance, low temperature performance and compressibility. In addition, the presence of small amounts of water in hydraulic fluids has been found to detrimentally affect the filterability of such fluids. Reduced filterability may result in plugging of hydraulic system filters.

According to the present invention there is provided a copolymer useful as a viscosity improving additive for hydraulic fluids. The copolymer provides improvement of the viscosity index of the fluid while allowing the fluid to retain rapid demulsibility and filterability.

In one aspect of the present invention the copolymer comprises from about 55 weight percent to about 99.5 weight percent of repeating units of the structural formula: 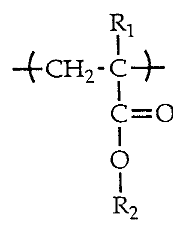
wherein each occurrence of R₁ is independently H or methyl, and each occurrence of R₂ is independently selected from the group consisting of (C₈-C₁₅)alkyl.

In a preferred embodiment, the copolymer consists essentially of from about 55 weight percent to about 99.5 weight percent first repeating units of the structural formula: 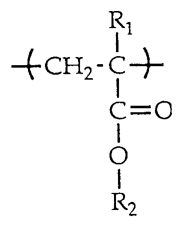
wherein each occurrence of R₁ is independently H or methyl, and each occurrence of R₂ is independently selected from the group consisting of (C₈-C₁₅)alkyl; and from about 0.5 weight percent to about 45 weight percent second repeating units of the structural formula: 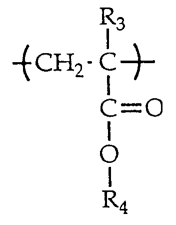
wherein each occurrence of R₃ is independently H or methyl, and each occurrence of R₄ is independently n-butyl, iso-butyl or t-butyl.

In an alternative preferred embodiment, the copolymer consists essentially of from about 55 weight percent to about 98.5 weight percent first repeating units of the structural formula: 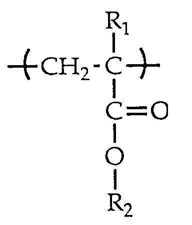
wherein each occurrence of R₁ is independently H or methyl, and each occurrence of R₂ is independently selected from the group consisting of (C₈-C₁₅)alkyl; and from about 0.5 weight percent to about 44 weight percent second repeating units of the structural formula: 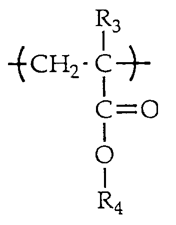
wherein each occurrence of R₃ is independently H or methyl, and each occurrence of R₄ is independently n-butyl, iso-butyl or t-butyl; and from about 1 weight percent to about 20 weight percent third repeating units of the structural formula: 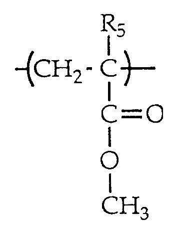
wherein each occurrence of R₅ is independently H or methyl.

In an alternative preferred embodiment, the copolymer consists essentially of from about 55 weight percent to about 97 weight percent first repeating units of the structural formula: 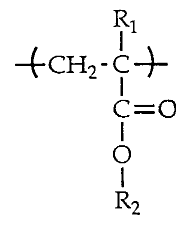
wherein each occurrence of R₁ is independently H or methyl, and each occurrence of R₂ is independently selected from the group consisting of (C₈-C₁₅)alkyl; and from about 0.5 weight percent to about 42.5 weight percent second repeating units of the structural formula: 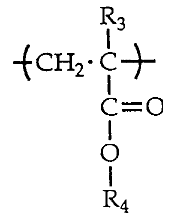
wherein each occurrence of R₃ is independently H or methyl, and each occurrence of R₄ is independently n-butyl, iso-butyl or t-butyl; and from about 2.5 weight percent to about 35 weight percent third repeating units of the structural formula: 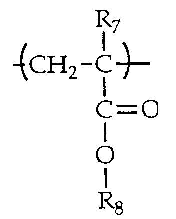
wherein each occurrence of R₇ is independently H or methyl, and each occurrence of R₈ is independently selected from the group consisting of (C₁₆-C₂₄) alkyl.

In an alternative preferred embodiment, the copolymer consists essentially of from about 55 weight percent to about 96 weight percent first repeating units of the structural formula: 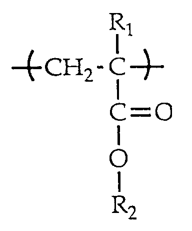
wherein each occurrence of R₁ is independently H or methyl, and each occurrence of R₂ is independently selected from the group consisting of (C₈-C₁₅)alkyl; and from about 0.5 weight percent to about 41.5 weight percent second repeating units of the structural formula: 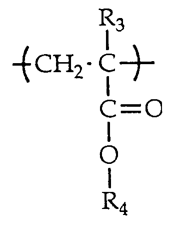
wherein each occurrence of R₃ is independently H or methyl, and each occurrence of R₄ is independently n-butyl, iso-butyl or t-butyl; and from about 1 weight percent to about 20 weight percent third repeating units of the structural formula: 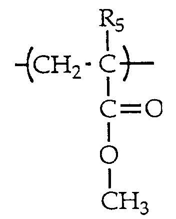
wherein each occurrence of R₅ is independently H or methyl; and from about 2.5 weight percent to about 35 weight percent fourth repeating units of the structural formula: 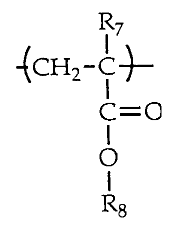
wherein each occurrence of R₇ is independently H or methyl, and each occurrence of R₈ is independently selected from the group consisting of (C₁₆-C₂₄) alkyl.

In an alternative preferred embodiment, the copolymer comprises from greater than about 90 weight percent to about 99.5 weight percent first repeating units of the structural formula: 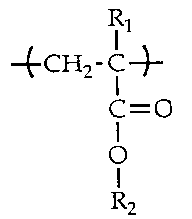
wherein each occurrence of R₁ is independently H or methyl, and each occurrence of R₂ is independently selected from the group consisting of (C₈-C₁₅)alkyl; from about 0.5 weight percent to less than about 10 weight percent second repeating units of the structural formula: 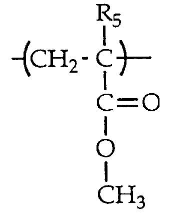
wherein each occurrence of R₅ is independently H or methyl.

In an alternative preferred embodiment, the copolymer comprises from about 55 weight percent to about 96.5 weight percent first repeating units of the structural formula: 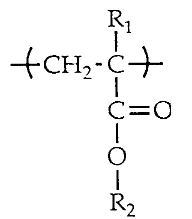
wherein each occurrence of R₁ is independently H or methyl, and each occurrence of R₂ is independently selected from the group consisting of (C₈-C₁₅)alkyl; from about 1 weight percent to about 20 weight percent second repeating units of the structural formula: 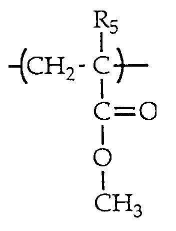
wherein each occurrence of R₅ is independently H or methyl; and from about 2.5 weight percent to about 35 weight percent third repeating units of the structural formula: 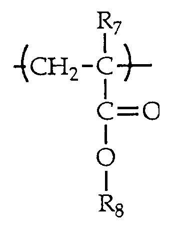
wherein each occurrence of R₇ is independently H or methyl, and each occurrence of R₈ is independently selected from the group consisting of (C₁₆-C₂₄) alkyl.

As used herein, the term "copolymer" means a polymer having more than one type of repeating unit and includes, e.g., copolymers, terpolymers and tetrapolymers.

The present invention also provides a method for improving the viscosity index of a hydraulic fluid, which comprises adding to the hydraulic fluid from about 2 weight percent to about 20 weight percent, based on the weight of the hydraulic fluid, of a copolymer selected from the above described copolymers.

An alternative method for improving the viscosity index of a hydraulic fluid comprises adding to the hydraulic fluid from about 2 weight percent to about 20 weight percent, based on the weight of the hydraulic fluid, of a homopolymer of repeating units each having the structural formula: 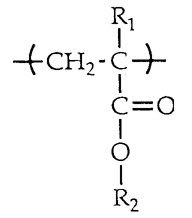
wherein each occurrence of R₁ is independently H or methyl, and each occurrence of R₂ is independently selected from the group consisting of (C₈-C₁₅)alkyl.

The copolymer of the present invention comprises from about 55 weight percent (wt%) to about 99.5 wt% repeating units, each having the structural formula (1): 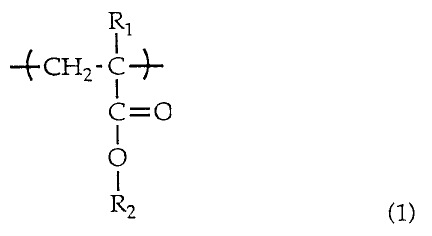
wherein each occurrence of R₁ is independently H or methyl, and each occurrence of R₂ is independently selected from the group consisting of (C₈-C₁₅)alkyl; and from 0.5 wt% to about 45 wt% repeating units selected from the group consisting of repeating units of the structural formulae (2), (3) or (4) disclosed below, and mixtures thereof.

Preferably, R₁ is methyl.

As used herein, (C₈-C₁₅) alkyl means any straight or branched alkyl group having 8 to 15 carbon atoms per group, e.g., octyl, nonyl, decyl, isodecyl, undecyl, lauryl, tridecyl, myristyl or pentadecyl. Preferably, R₂ is(C₁₀-C₁₅)alkyl. More preferably, R₂ is selected from the group consisting of isodecyl, lauryl, tridecyl, myristyl, pentadecyl and mixtures thereof.

The copolymer of the present invention comprises from about 0 wt% to about 45 wt% repeating units, each having the structural formula (2): 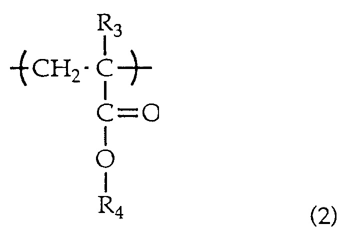
wherein each occurrence of R₃ is independently H or methyl, and each occurrence of R₄ is independently n-butyl, iso-butyl or t-butyl.

The copolymer comprises from about 0 wt% to about 20 wt% repeating units, each having the structural formula (3): 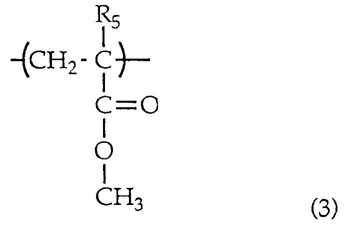
wherein each occurrence of R₅ is independently H or methyl.

Preferably, R₅ is methyl.

The copolymer comprises from about 0 wt% to about 35 wt% repeating units, each having the structural formula (4): 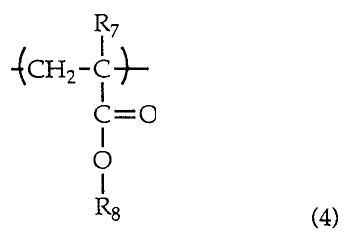
wherein each occurrence of R₇ is independently H or methyl, and each occurrence of R₈ is independently selected from the group consisting of (C₁₆-C₂₄) alkyl.

Preferably, R₇ is methyl.

As used herein, (C₁₆-C₂₄) alkyl means any straight or branched alkyl group having 16 to 24 carbon atoms per group, e.g., stearyl, heptadecyl, cetyl, nonadecyl or eicosyl. Preferably, R₈ is (C₁₆-C₂₀)alkyl. More preferably, R₈ is selected from the group consisting of stearyl, cetyl, eicosyl and mixtures thereof.

The copolymer of the present invention preferably has a number average molecular weight, determined, e.g., by gel permeation chromatography, between about 15,000 and about 120,000, more preferably between about 20,000 and about 100,000, and most preferably between about 25,000 and about 75,000.

The copolymer of the present invention preferably has a weight average molecular weight, determined, e.g., by gel permeation chromatography, between about 25,000 and about 225,000, more preferably between about 37,500 and about 225,000, and most preferably between about 50,000 and about 200,000.

In a preferred embodiment, the copolymer comprises from about 55 wt% to about 99.5 wt% repeating units of the structural formula (1), and from about 0.5 wt% to about 45 wt% repeating units of the structural formula (2). More preferably, the copolymer comprises from about 60 wt% to about 90 wt% repeating units of the structural formula (1), and from about 10 wt% to about 40 wt% repeating units of the structural formula (2). Even more preferably, the copolymer comprises from about 70 wt% to about 85 wt% repeating units of the structural formula (1), and from about 15 wt% to about 30 wt% repeating units of the structural formula (2).

In a second preferred embodiment, the copolymer comprises from about 55 wt% to about 98.5 wt% repeating units of the structural formula (1), from about 0.5 wt% to about 44 wt% repeating units of the structural formula (2), and from about 1 wt% to about 20 wt% repeating units of the structural formula (3). More preferably, the copolymer comprises from about 60 wt% to about 87.5 wt% repeating units of the structural formula (1), from about 10 wt% to about 37.5 wt% repeating units of the structural formula (2), and from about 2.5 wt% to about 17 wt% repeating units of the structural formula (3). Still more preferably, the copolymer comprises from about 70 wt% to about 80 wt% repeating units of the structural formula (1), from about 15 wt% to about 25 wt% repeating units of the structural formula (2), and from about 5 wt% to about 15 wt% repeating units of the structural formula (3).

In a third preferred embodiment, the copolymer comprises from about 55 wt% to about 97 wt% repeating units of the structural formula (1), and from about 0.5 wt% to about 42.5 wt% repeating units of the structural formula (2), and from about 2.5 wt% to about 35 wt% repeating units of the structural formula (4). More preferably, the copolymer comprises from about 60 wt% to about 85 wt% repeating units of the structural formula (1), and from about 10 wt% to about 35 wt% repeating units of the structural formula (2), and from about 5 wt% to about 25 wt% repeating units of the structural formula (4). Still more preferably, the copolymer comprises from about 65 wt% to about 75 wt% repeating units of the structural formula (1), and from about 15 wt% to about 25 wt% repeating units of the structural formula (2), and from about 10 wt% to about 20 wt% repeating units of the structural formula (4).

In a fourth preferred embodiment, the copolymer comprises from about 55 wt% to about 96 wt% repealing units of the structural formula (1), from about 0.5 wt% to about 41.5 wt% repeating units of the structural formula (2), from about 1 to about 20 wt% repeating units of the structural formula (3), and from about 2.5 wt% to about 35 wt% repeating units of the structural formula (4). More preferably, the copolymer comprises from about 55 wt% to about 82.5 wt% repeating units of the structural formula (1), from about 10 wt% to about 37.5 wt% repeating units of the structural formula (2), from about 2.5 wt% to about 17 wt% repeating units of the structural formula (3), and from about 5 wt% to about 25 wt% repeating units of the structural formula (4). Still more preferably, the copolymer comprises from about 55 wt% to about 70 wt% repeating units of the structural formula (1), from about 15 wt% to about 30 wt% repeating units of the structural formula (2), from about 5 wt% to about 15 wt% repeating units of the structural formula (3), and from about 10 wt% to about 20 wt% repeating units of the structural formula (4).

In a fifth preferred embodiment, the copolymer comprises from greater than about 90 wt% to about 99.5 wt% repeating units of the structural formula (1), and from about 0.5 wt% to less than about 10 wt% repeating units of the structural formula (3). More preferably, the copolymer comprises from about 92 wt% to about 97.5 wt% repeating units of the structural formula (1), and from about 2.5 wt% to about 8 wt% repeating units of the structural formula (3).

In a sixth preferred embodiment, the copolymer comprises from about 55 wt% to about 96.5 wt% repeating units of the structural formula (1), from about 1 wt% to about 20 wt% repeating units of the structural formula (3), and from about 2.5 wt% to about 35 wt% repeating units of the structural formula (4). More preferably, the copolymer comprises from about 60 wt% to about 92.5 wt% repeating units of the structural formula (1), from about 2.5 wt% to about 17 wt% repeating units of the structural formula (3), and from about 5 wt% to about 25 wt% repeating units of the structural formula (4). Still more preferably, the copolymer comprises from about 70 wt% to about 85 wt% repeating units of the structural formula (1), from about 5 wt% to about 15 wt% repeating units of the structural formula (3), and from about 10 wt% to about 20 wt% repeating units of the structural formula (4).

In a preferred embodiment, those repeating units of the copolymer having structural formula (1) are derived from one or more (C₈-C₁₅)alkyl (meth)acrylate monomer, more preferably, one or more (C₈-C₁₅)alkyl methacrylate monomer.

As used herein, "(C₈-C₁₅)alkyl (meth)acrylate monomer" means an alkyl ester of (meth)acrylic acid having a straight or branched alkyl group of 8 to 15 carbon atoms per group. Suitable (C₈-C₁₅) alkyl (meth)acrylate monomers include, e.g., octyl methacrylate, nonyl methacrylate, decyl methacrylate, isodecyl methacrylate, undecyl methacrylate, lauryl methacrylate, lauryl acrylate, tridecyl methacrylate, myristyl methacrylate, pentadecyl methacrylate and mixtures thereof, e.g., laurylmyristyl methacrylate and dodecyl-pentadecyl methacrylate.

In a preferred embodiment, those repeating units of the copolymer having structural formula (2) are derived from one or more (C₄)alkyl (meth)acrylate monomer, more preferably, one or more (C₄)alkyl methacrylate monomer

As used herein, "(C₄)alkyl (meth)acrylate monomer" is used synonymously with the terminology "butyl (meth)acrylate" and means an alkyl ester of (meth)acrylic acid having a straight or branched alkyl group of 4 carbon atoms per group and includes, e.g., n-butyl acrylate, n-butyl methacrylate, iso-butyl methacrylate and t-butyl methacrylate.

In a preferred embodiment, those repeating units of the copolymer having structural formula (3) are derived from methyl acrylate monomer and/or methyl methacrylate monomer, more preferably, methyl methacrylate monomer.

In a preferred embodiment, those repeating units of the copolymer having structural formula (4) are derived from one or more (C₁₆-C₂₄)alkyl (meth)acrylate monomer, more preferably, one or more (C₁₆-C₂₄)alkyl methacrylate monomer.

As used herein, "(C₁₆-C₂₄)alkyl (meth)acrylate monomer" means an alkyl ester of (meth)acrylic acid having a straight or branched alkyl group of 16 to 24 carbon atoms per group. Suitable (C₁₆-C₂₄) alkyl (meth)acrylate monomers include e.g., stearyl acrylate, stearyl methacrylate, cetyl methacrylate, heptadecyl methacrylate, nonadecyl methacrylate, eicosyl methacrylate and mixtures thereof, e.g., cetyl-stearyl methacrylate and cetyl-eicosyl methacrylate.

The copolymers of the present invention can be made by free radical initiated polymerization of alkyl (meth)acrylate monomers, wherein the term "alkyl (meth)acrylate" is used to refer to alkyl acrylate monomers, alkyl methacrylate monomers and mixtures thereof. Similarly, the terminology "(meth)acrylic acid" is used herein to refer to acrylic acid, methacrylic acid and mixtures thereof. Commercially available alkyl (meth)acrylate monomers may be, and typically are, mixtures of esters. Such mixtures are typically referred to, and are referred to herein, using a contracted version of the names of the ester species predominating in the mixture, e.g., "lauryl-myristyl methacrylate", "cetyl-eicosyl methacrylate", "cetylstearyl methacrylate" and "dodecyl-pentadecyl methacrylate".

The copolymers of the present invention may, for example, be prepared by a method comprising charging, to a reactor vessel, a reaction mixture comprising diluent, appropriate relative amounts of appropriate respective alkyl (meth)acrylate monomers, and an effective amount of polymerization initiator. Preferably, the reaction vessel is equipped with a stirrer, a thermometer, a reflux condenser and a metering line.

The usefulness of the method is not limited to the above-described preferred copolymer compositions, i.e., the method provides improved demulsibility properties to known copolymers, e.g. poly(lauryl methacrylate/methyl methacrylate) copolymers, as well.

In a preferred embodiment, the reaction mixture includes from about 55 weight percent to about 99.5 weight percent of one or more first monomer selected from the group consisting of (C₈-C₁₅)alkyl (meth)acrylates and mixtures thereof, and from about 0.5 weight percent to about 45 weight percent of one or more second monomer selected from the group consisting of (C₁-C₇)alkyl (meth)acrylates, (C₁₆-C₂₄)alkyl (meth)acrylates and mixtures thereof.

As used herein the terminology"(C₁-C₇)alkyl (meth)acrylates" means an alkyl ester of (meth)acrylic acid having a straight or branched alkyl group of 1 to 7 carbon atoms per group and includes, e.g., methyl methacrylate, ethyl acrylate, propyl methacrylate, butyl acrylate, pentyl methacrylate, hexyl acrylate and heptyl methacrylate.

In a more highly preferred embodiment of the method, the monomers of the reaction mixture are selected so that the method provides a copolymer according to one of the above-described preferred embodiments of the copolymer of the present invention.

The diluent may be an inert hydrocarbon and is preferably a hydrocarbon lubricating oil which is compatible with or identical to the base oil in which the additive is preferably to be subsequently employed. The reaction mixture preferably includes from about 15 to about 400 parts by weight (pbw) diluent per 100 pbw total monomers and, more preferably, from about 50 to about 200 pbw diluent per 100 pbw total monomers. As used herein, "total monomers" means the combined amount of all monomers in the reaction mixture.

Suitable polymerization initiators include those initiators which dissociate upon relatively mild heating, i.e., at temperatures up to about 100°C, to yield a free radical.

In a preferred embodiment, the polymerization initiator is an initiator having a half-life of less than about 30 minutes at the intended reaction temperature. Those polymerization initiators having a half-life from about 1 minute to about 180 minutes at about 100°C, e.g., 2,2'-*azobis* (2-methylbutanenitrile), 2,2' *azobis* (2,4-dimethylpentanenitrile),1,1'-*azobis*(cyclohexanecarbonitrile), t-butyl peroctoate and mixtures thereof, are particularly preferred. More preferred are those polymerization initiators having a half life of about 5 minutes to about 30 minutes at about 90°C, including, e.g., 2,2'-*azobis* (2-methylbutanenitrile), 2,2' *azobis* (2,4-dimethylpentanenitrile).

The reaction mixture preferably includes, from about 0.05 pbw to about 2.0 pbw polymerization initiator per 100 pbw total monomers and, more preferably, from about 0.1 pbw to about 1.0 pbw polymerization initiator per 100 pbw total monomers.

In a preferred embodiment, the reaction mixture includes a chain transfer agent. Suitable chain transfer agents include those conventional in the art, e.g., dodecyl mercaptan and ethyl mercaptan. Dodecyl mercaptan is preferred as the chain transfer agent. The selection of the amount of chain transfer agent to be used is based, in a manner conventional in the art, on the desired molecular weight of the polymer being synthesized. The reaction mixture typically includes, e.g., from about 0.05 pbw to about 1.9 pbw chain transfer agent per 100 pbw total monomers, and more preferably, from about 0.1 pbw to about 0.8 pbw chain transfer agent per 100 pbw total monomers.

The reaction mixture is typically charged to a reaction vessel and heated with stirring, preferably under an inert, e.g., nitrogen, blanket, to a temperature within a first reaction temperature range. Selection of limits of the first reaction temperature range is based on the initiator selected and the range includes those temperatures effective to rapidly dissociate the selected initiator to an upper limit of about 100°C, e.g., from about 75°C to about 100°C. In a preferred embodiment, the first reaction temperature range is from about 75°C to about 95°C. The batch is then typically maintained at a temperature within the first reaction temperature range, with stirring, for a time period effective to allow copolymerization of the monomers in the reaction mixture, e.g., for about 2 hours to about 12 hours.

In a preferred embodiment, a portion, e.g., from about 25% to about 60%, of the reaction mixture is initially charged to the reaction vessel and heated to a temperature within the first reaction temperature range. The remaining portion of the reaction mixture is then fed into the reaction vessel with stirring and while maintaining the batch at a temperature within the first reaction temperature range over a time period of about 30 minutes to about 180 minutes. Following completion of the reaction mixture addition, the batch is maintained at a temperature within the first reaction temperature range for a holding period of up to about 4 hours.

In a preferred embodiment, a second portion of initiator of about 0.05 pbw to about 1.0 pbw polymerization initiator per 100 pbw total monomers is added to the reaction mixture subsequent to the holding period .

In one preferred embodiment, the second portion of initiator is added to the reaction mixture at a substantially continuous rate over a time period of about 30 minutes to about 180 minutes while maintaining the reaction mixture at a temperature within a second reaction temperature range, wherein the second reaction temperature range includes those temperatures, up to about 100°C, e.g., from about 75°C to about 100°C, and preferably from about 75°C to about 95°C, effective to rapidly dissociate the added initiator.

In an alternate preferred embodiment, the second portion of polymerization initiator is added by periodically charging subportions of the second portion of initiator to the reaction vessel while maintaining the reaction mixture at a temperature within a second reaction temperature range, wherein the second reaction temperature range includes those temperatures, up to about 100°C, e.g., from about 75°C to about 100°C, and preferably from about 75°C to about 95°C, effective to rapidly dissociate the added initiator.

In a preferred embodiment, the second portion of initiator is the same initiator as that in the initial reaction mixture, and the first and second reaction temperature ranges are identical. Alternatively, the composition of the second portion of initiator may differ from the initiator present in the initial reaction mixture and, in the embodiment wherein subportions of initiator are periodically charged to the reaction vessel, the compositions of the respective subportions may differ from each other. Selection of the appropriate second reaction temperature range to be maintained following each addition of initiator is based on the respective half-life of each of the added portions of initiator in the manner described above.

The reaction mixture is preferably held at the second reaction temperature range for a time period of about 30 minutes to about 180 minutes subsequent to the addition of the second portion of polymerization initiator to complete the polymerization reaction.

A viscous solution of the copolymer of the present invention in the diluent is obtained as the product of the reaction.

The above-discussed copolymers may each be combined with a base oil, e.g., a paraffinic solvent neutral oil, in a conventional manner, i.e., by adding the copolymer to the base oil to form a solution of the additive in the base oil, to provide a hydraulic fluid composition having the desired viscometric properties.

In a preferred embodiment, a hydraulic fluid of the present invention includes from about 2 pbw to about 20 pbw viscosity index improving copolymer per 100 pbw base oil.

In a preferred embodiment, the copolymer is added to the base oil in the form of a relatively concentrated solution of the copolymer in a diluent, e.g., a solution of from about 100 pbw copolymer dissolved in from about 25 pbw to about 250 pbw of the hydrocarbon diluent used in the above described polymerization process.

The hydraulic fluid may include other conventional additives, e.g., antioxidants, anti-wear additives, in addition to the viscosity index improving copolymer of the present invention.

The following Examples are presented to illustrate various embodiments of the present invention.

### Example 1

A reaction mixture was prepared by combining 1046.15 grams (85 pbw) lauryl-myristyl methacrylate (100% basis, 97.5% purity), 180 grams (15 pbw) butyl methacrylate, 1.32 grams (0.11 pbw) of a polymerization initiator (2,2'-*azobis* (2-methylbutanenitrile)), 9 grams (0.75 pbw) of a chain transfer agent (dodecyl mercaptan) and 1.92 grams (0.16 pbw) paraffinic oil (100N oil).

A 2 litre reactor equipped with a thermometer, a temperature controller, a stirrer, an addition funnel, a purge gas inlet and a water-cooled reflux condenser with a purge gas outlet was charged with 13.8 grams (1.15 pbw) paraffinic oil and then flushed with nitrogen.

A portion (~ 30 wt%) of the reaction mixture was then charged to the nitrogen-flushed reactor and heated. When the temperature reached 95°C the remainder of the reaction mixture was added to the reactor at a steady rate over a time period of 60 minutes. The temperature of the batch was maintained at 95°C during the addition. After all the reaction mixture was charged, the batch was held at 95°C, with stirring, for 30 minutes.

After the 30 minute holding period, a first shot of an initiator mixture (1.32 grams ( 0.11 pbw) 2,2'-*azobis* (2-methylbutanenitrile)) and 60 grams (5 pbw) paraffinic oil) was added to the reactor and the temperature was held at 95°C for an additional 30 minutes. Two additional shots of initiator were then added to the batch with a 30 minute hold at 95°C between shots.

Thirty minutes after the addition of the final initiator shot, 163.85 grams (13.65 pbw) paraffinic oil were charged to the reactor to dilute the product mixture.

The above described process yielded 1595.5 grams of a polymer solution having a crude polymer solids content of 72.86 weight percent at a monomer conversion of 96.87 %, a kinematic viscosity (measured according to ASTM D-445) of 7.63 x 10⁻⁴ m².s⁻¹ (763 centiStokes (cSt)) at 100°C, and shear stability index (SSI) (measured according to ASTM D-2603) of 6.5.

### Example 2

The procedure set forth above in Example 1 was followed, except that 2,2' *azobis* (2,4-dimethylpentanenitrile) was used as the polymerization initiator, the reaction was run at 80°C rather than 95°C, and 100.48 grams (15.46 pbw) oil was added to yield a product mixture having a crude polymer solids content of 73.43% at a monomer conversion of 99.0%, a kinematic viscosity of 7.03 x 10⁻⁴ m².s⁻¹ (703 cSt) at 100°C, and SSI of 5.9.

### Example 3

The procedure set forth above in Example 1 was followed, except that 1,1'-*azobis*(cyclohexanecarbonitrile) was used as the initiator, the reaction was run at 120°C rather than 95°C and 100.48 grams (15.46 pbw) oil was added to yield a product mixture having a crude polymer solids content of 70.6 % at a monomer conversion of 95.1%, a kinematic viscosity of 5.69 x 10⁻⁴ m².s⁻¹(569 cSt) at 100°C, and SSI of 5.5.

### Example 4

The procedure set forth above in Example 1 was followed, except that t-butyl peroctoate was used as the initiator, the reaction was run at 120 °C rather than 95°C, additional initiator was continuously fed to the reactor rather than being added in discrete shots (after the first 30 minute holding period at the reaction temperature a stream of 1.70 grams (0.17 pbw) t-butyl peroctoate in 150 grams (15.0 pbw) oil was added at a steady rate over 60 minutes and then held at the reaction temperature for 30 minutes) and 135.19 grams (13.5 pbw) oil was added to yield a product mixture having a crude polymer solids content of 72.78 % at a monomer conversion of 98.95 %, a kinematic viscosity of 7.49 x 10⁻⁴ m².s⁻¹ (749 cSt) at 100°C, and SSI of 8.5.

### Examples 5 to 16

The copolymers of Examples 5 to 16 were each made according to the process set forth above in Example 1, except that different initiators and reaction temperatures, were used.

The relative monomer composition of the reaction mixture, the polymerization process used to make each of the copolymers of Examples 1 to 15, and the polymer solids of the respective reaction products are summarized below in Table 1:
the monomers used are abbreviated in Table 1 as:
methyl methacrylate (MMA);
butyl methacrylate (BMA);
lauryl-myristyl methacrylate (LMMA); and
stearyl methacrylate (SMA);
and the Example numbers specified in the "Process" column of Table 1 denote which of the above described processes was used in the preparation of each of the respective copolymers, i.e.:
Example 1 (2,2'-*azobis* (2-methylbutanenitrile), 95°C);
Example 2 (2,2' *azobis* (2,4-dimethylpentanenitrile), 80°C);
Example 3 (1,1'-*azobis*(cyclohexanecarbonitrile), 120°C); or
Example 4 (t-butyl peroctoate, 120°C).

**TABLE 1**

| Copolymer (Example No.) | Process (Example No.) (%) | Polymer Solids | LMMA/BMA/MMA/SMA (wt %) |
|---|---|---|---|
| 1 | 1 | 72.86 | 85/15/0/0 |
| 2 | 2 | 73.43 | 85/15/0/0 |
| 3 | 3 | 70.6 | 85/15/0/0 |
| 4 | 4 | 72.78 | 85/15/0/0 |
| 5 | 3 | 72.20 | 80/20/0/0 |
| 6 | 3 | 71.25 | 75/25/0/0 |
| 7 | 3 | 72.72 | 70/30/0/0 |
| 8 | 4 | 69.47 | 65/35/0/0 |
| 9 | 3 | 73.01 | 65/35/0/0 |
| 10 | 1 | 73.66 | 75/25/0/0 |
| 11 | 1 | 70.18 | 70/15/0/15 |
| 12 | 1 | 75.25 | 60/15/10/15 |
| 13 | 1 | 74.96 | 75/0/10/15 |
| 14 | 1 | 74.21 | 70/0/15/15 |
| 15 | 3 | 73.32 | 94.8/0/5.2/0 |
| 16 | 3 | 74.13 | 100/0/0/0 |

### Examples 17,18 and C1

Copolymers of a known composition (85 wt% LMMA/15 wt% MMA) were made by the respective processes of Example 3,1 and 2, as summarized below in Table 2.

**TABLE 2**

| Composition (Example No.) | Process (Example No.) | LMMA/MMA (wt%) |
|---|---|---|
| C1 | 3 | 85/15 |
| 17 | 1 | 85/15 |
| 18 | 2 | 85/15 |

### Examples 19-21

Copolymers of the composition 70 wt% LMMA/15 wt% MMA/15 wt% SMA were made by the process of Example 4 except that different respective amounts of the chain transfer agent (dodecyl mercaptan) were used. The amount of chain transfer agent (CTA) used, expressed as parts by weight chain transfer agent per 100 parts by weight of the combined amount of LMMA, MMA and SMA monomers (pbw CTA/100pbw monomers), the number average molecular weight (MWₙ) and the weight average molecular weight (MW_{w}) for each of Examples 19-21 are set forth below in Table 3. The molecular weights were measured by gel permeation chromatography using a poly(methyl methacrylate) standard.

**TABLE 3**

| Example No. | CTA (pbw CTA/100pbw monomers) | MWₙ | MW_{w} |
|---|---|---|---|
| 19 | 0.25 | 1.8x10⁵ | 6.64x10⁴ |
| 20 | 0.475 | 9.7x10⁴ | 4.35x10⁴ |
| 21 | 0.75 | 5.1 x 10⁴ | 2.22 x 10⁴ |

### Example 22

Hydraulic fluid formulations including each of the respective compositions of Examples 1 to 18 and C1 were characterized with respect to the viscosity index, demulsibility, low temperature kinematic viscosity and filterability.

Samples for use in measuring viscosity index were formulated by adding an amount (~10 wt%) of a respective one of the compositions of Examples 1 to 18 and C1 to hydraulic oil (Sun HPO 100) effective to provide a kinematic viscosity of 1.075 x 10⁻⁵ m².s⁻¹ (10.75 cSt) at 100°C. The viscosity index of each of the samples was determined according to ASTM method D 2270-74 by comparing the respective kinematic viscosities at 40°C and 100°C. Results are set forth below in Table 3 as VI.

Samples for use in measuring demulsibility were formulated by adding 10 pbw of a respective one of the compositions of Examples 1 to 18 and C1 to 90 pbw base oil (Sun HPO 100). The demulsibility of each of the samples was characterized by the method of ASTM D 1401. A 40 milliliter (ml) volume of the sample material was emulsified with a 40 mL volume of distilled water by stirring the combined liquids in a graduated cylinder. The separation of the emulsion into organic and aqueous layers was characterized by monitoring the relative volumes of the respective oil, water and emulsion layers after cessation of stirring. Results are set forth below in Table 3 as the respective (ml oil/ml water/ml emulsion) observed at 10 minutes and 30 minutes after cessation of stirring.

Low temperature kinematic viscosity is a measurement of the ability of the hydraulic fluid to flow at low temperature. Samples for use in measuring low temperature kinematic viscosity were formulated by adding an amount (~7 wt%) of a respective one of the viscosity index improvers of Examples 1 to 18 and C1 to a base oil blend (blend of 65 wt% Shell HVI 60 and 35 wt% Shell MVIN 40) effective to provide a kinematic viscosity of 32 (plus or minus 10%) millimeters²/second at 40°C. The kinematic viscosity of each of the samples was measured, using the method of ASTM D 445, at -30°C (the HVI 60/MVIN 40 base oil blend was solid at -30°C). Results are set forth below in Table 3 as KV @ -30°C (m².s⁻¹ and cSt).

Samples for use in measuring filterability were formulated by adding an amount (~7 wt%) of a respective one of the viscosity index improvers of Examples 1 to 18 and C1, corresponding to the amount used in the samples prepared for low temperature kinematic viscosity testing, to a base oil (Shell HVI 60). The filterability of each of the hydraulic fluid compositions was characterized according to Centre European de Transmission Oleo Pneumatique (CETOP) test method GB 15.01 D. The time required for a one litre volume of each of the respective samples to filter through a membrane having a porosity of 1.2 micron under a vacuum of 8.84 x 10³ kg.m⁻² [65 centimetres (26 inches) of mercury] was measured (the various lots of the HVI 60 base oil used exhibited filtration times from about 20 to about 25 minutes). Results are set forth below in Table 3 as filtration time (minutes).

**TABLE 3**

| Composition (Example No) | VI | KV @ -30°C | | Filtration Time (minutes) | Demulsibility (ml oil/ml water/ ml emulsion) | |
|---|---|---|---|---|---|---|
| | | m².s⁻¹ | (cSt) | | 10 min | 30 min |
| 1 | 152 | 6.42 x 10⁻³ | (6420) | --- | 10/26/44 | 31/38/1 |
| 2 | 153 | --- | (---) | 47.5 | 11/29/40 | 40/39/1 |
| 3 | 152 | --- | (---) | 57.5 | 10/24/46 | 39/36/5 |
| 4 | 153 | --- | (---) | --- | 3/26/51 | 41/34/5 |
| 5 | 150 | --- | (---) | --- | 42/36/2 | 41/38/1 |
| 6 | 153 | --- | (---) | 49 | 8/20/52 | 35/36/9 |
| 7 | 156 | --- | (---) | 39 | 5/15/60 | 20/33/27 |
| 8 | 154 | --- | (---) | 45.5 | 5/10/65 | 15/27/38 |
| 9 | 153 | --- | (---) | 43 | 40/39/1 | 40/39/1 |
| 10 | 157 | 7x10⁻³ | (7000) | 130 | 7/9/64 | 13/17/50 |
| 11 | 154 | --- | (---) | 150 | 13/15/52 | 40/36/4 |
| 12 | 160 | 4.976 x 10⁻³ | (4976) | 75 | 6/23/51 | 15/35/30 |
| 13 | 157 | 4.2 x 10⁻³ | (4200) | 105 | 10/10/60 | 15/20/45 |
| 14 | 161 | 3.935 x 10⁻³ | (3935) | 97 | 4/4/72 | 8/10/62 |
| 15 | 152 | --- | (---) | --- | 10/14/56 | 40/37/3 |
| 16 | 152 | --- | (---) | 86.5 | 39/40/1 | 39/40/1 |
| 17 | 156 | --- | (---) | --- | 22/25/33 | 35/36/9 |
| 18 | 157 | --- | (---) | --- | 18/17/45 | 37/36/7 |
| C1 | 157 | --- | (---) | --- | 4/2/74 | 20/14/46 |
| HPO 100 | 90 | --- | (---) | --- | 40/40/0 | --- |

The copolymer of the present invention is useful as a viscosity index improving additive for hydraulic fluids and provides improved demulsibility and filterability to such fluids. Preferred embodiments of the copolymer impart improved low temperature fluidity as well.

## Claims

1. A copolymer, consisting essentially of:
from about 55 weight percent to about 99.5 weight percent first repeating units of the structural formula: 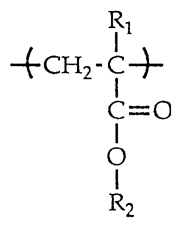 wherein each occurrence of R₁ is independently H or methyl, and each occurrence of R₂ is independently selected from the group consisting of (C₈-C₁₅)alkyl; and from about 0.5 weight percent to about 45 weight percent second repeating units of the structural formula: 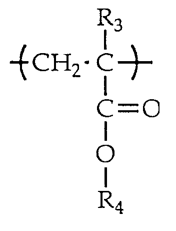 wherein each occurrence of R₃ is independently H or methyl, and each occurrence of R₄ is independently n-butyl, isobutyl or t-butyl.

2. A copolymer as claimed in claim 1, wherein the copolymer consists essentially of: from about 60 weight percent to about 90 weight percent first repeating units; and from about 10 weight percent to about 40 second repeating units.

3. A copolymer as claimed in claim 1 or claim 2, wherein the first repeating units are derived from one or more (C₈-C₁₅)alkyl(meth)acrylate, and the second repeating units are derived from one or more butyl (meth)acrylate.

4. A copolymer, consisting essentially of:
from about 55 weight percent to about 98.5 weight percent first repeating units of the structural formula: 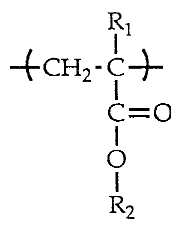 wherein each occurrence of R₁ is independently H or methyl, and each occurrence of R₂ is independently selected from the group consisting of (C₈-C₁₅)alkyl; from about 0.5 weight percent to about 44 weight percent second repeating units of the structural formula: 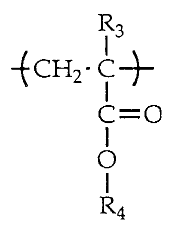 wherein each occurrence of R₃ is independently H or methyl, and each occurrence of R₄ is independently n-butyl, iso-butyl or t-butyl; and from about 1 weight percent to about 20 weight percent third repeating units of the structural formula: 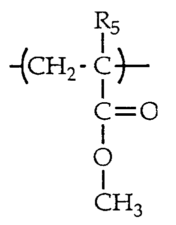 wherein each occurrence of R₅ is independently H or methyl.

5. A copolymer as claimed in claim 4, wherein the copolymer consists essentially of: from about 60 weight percent to about 87.5 weight percent first repeating units; from about 10 weight percent to about 37.5 weight percent second repeating units; and from about 2.5 weight percent to about 17 weight percent third repeating units.

6. A copolymer as claimed in claim 4 or 5, wherein the first repeating units are derived from one or more (C₈-C₁₅)alkyl(meth)acrylate, the second repeating units are derived from one or more butyl (meth)acrylate and, the third repeating units are derived from methyl methacrylate.

7. A copolymer, consisting essentially of:
from about 55 weight percent to about 97 weight percent first repeating units of the structural formula: 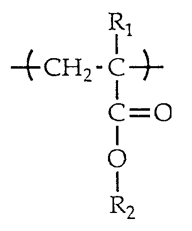 wherein each occurrence of R₁ is independently H or methyl, and each
occurrence of R₂ is independently selected from the group consisting of (C₈-C₁₅)alkyl; from about 0.5 weight percent to about 42.5 weight percent second repeating units of the structural formula: 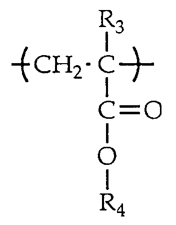 wherein each occurrence of R₃ is independently H or methyl, and each
occurrence of R₄ is independently n-butyl, iso-butyl or t-butyl; and from about 2.5 weight percent to about 35 weight percent third repeating units of the structural formula: 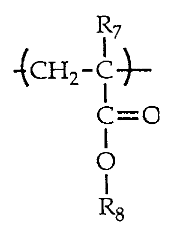 wherein each occurrence of R₇ is independently H or methyl, and each occurrence of R₈ is independently selected from the group consisting of (C₁₆-C₂₄) alkyl.

8. A copolymer as claimed in claim 7, wherein the copolymer consists essentially of: from about 60 weight percent to about 85 weight percent first repeating units; from about 10 weight percent to about 35 weight percent second repeating units; and from about 5 weight percent to about 25 weight percent third repeating units.

9. A copolymer as claimed in claim 7 or claim 8, wherein the first repeating units are derived from one or more (C₈-C₁₅)alkyl(meth)acrylate, the second repeating units are derived from methyl acrylate and/or methyl methacrylate, and the third repeating units are derived from one ore more (C₁₆-C₂₄)alkyl(meth)acrylate.

10. A copolymer, consisting essentially of: from about 55 weight percent to about 96 weight percent first repeating units of the structural formula: 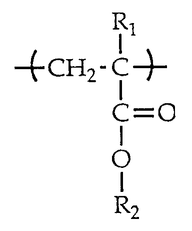 wherein each occurrence of R₁ is independently H or methyl, and each occurrence of R₂ is independently selected from the group consisting of (C₈-C₁₅)alkyl; from about 0.5 weight percent to about 41.5 weight percent second repeating units of the structural formula: 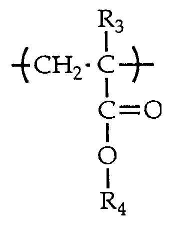 wherein each occurrence of R₃ is independently H or methyl, and each occurrence of R₄ is independently n-butyl, iso-butyl or t-butyl; from about 1 weight percent to about 20 weight percent third repeating units of the structural formula: 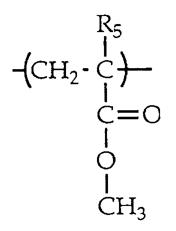 wherein each occurrence of R₅ is independently H or methyl; and from about 2.5 weight percent to about 35 weight percent fourth repeating units of the structural formula: 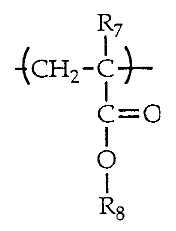 wherein each occurrence of R₇ is independently H or methyl, and each occurrence of R₈ is independently selected from the group consisting of (C₁₆-C₂₄) alkyl.

11. A copolymer as claimed in claim 10, wherein the copolymer consists essentially of: from about 60 weight percent to about 82.5 weight percent first repeating units; from about 10 weight percent to about 37.5 weight percent second repeating units; from about 2.5 weight percent to about 17 weight percent third repeating units; and from about 5 weight percent to about 25 weight percent fourth repeating units.

12. A copolymer as claimed in claim 10 or claim 11, wherein the first repeating units are derived from one or more (C₈-C₁₅)alkyl(meth)acrylate, the second repeating units are derived from one or more butyl (meth)acrylate, the third repeating units are derived from methyl acrylate and/or methyl methacrylate, and the fourth repeating units are derived from one or more (C₁₆-C₂₄)alkyl(meth)acrylate.

13. A copolymer, comprising: from greater than about 90 weight percent to about 99.5 weight percent first repeating units of the structural formula: 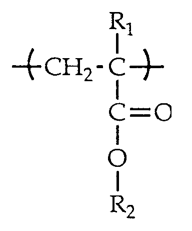 wherein each occurrence of R₁ is independently H or methyl, and each occurrence of R₂ is independently selected from the group consisting of (C₈-C₁₅)alkyl; and from about 0.5 weight percent to less than about 10 weight percent second repeating units of the structural formula: 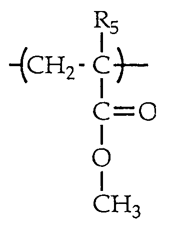 wherein each occurrence of R₅ is independently H or methyl.

14. A copolymer as claimed in claim 13, wherein the copolymer comprises from about 92 weight percent to about 97.5 weight percent first repeating units, and from about 2.5 weight percent to about 8 weight percent second repeating units.

15. A copolymer as claimed in claim 13 or claim 14, wherein the first repeating units are derived from one or more (C₈-C₁₅)alkyl(meth)acrylate, and the second repeating units are derived from methyl acrylate and/or methyl methacrylate.

16. A copolymer, comprising: from about 55 weight percent to about 96.5 weight percent first repeating units of the structural formula: 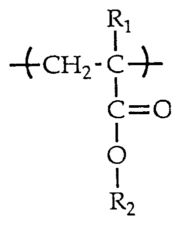 wherein each occurrence of R₁ is independently H or methyl, and each occurrence of R₂ is independently selected from the group consisting of (C₈-C₁₅)alkyl; from about 1 weight percent to about 20 weight percent second repeating units of the structural formula: 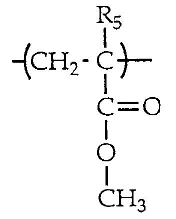 wherein each occurrence of R₅ is independently H or methyl; and from about 2.5 weight percent to about 35 weight percent third repeating units of the structural formula: 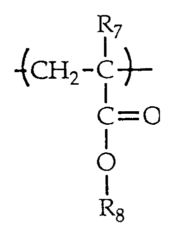 wherein each occurrence of R₇ is independently H or methyl, and each occurrence of R₈ is independently selected from the group consisting of (C₁₆-C₂₄) alkyl.

17. A copolymer as claimed in claim 16, wherein the copolymer comprises from about 60 weight percent to about 92.5 weight percent first repeating units, from about 2.5 weight percent to about 17 weight percent second repeating units, and from about 5 weight percent to about 25 weight percent third repeating units.

18. A copolymer as claimed in claim 16 or claim 17, wherein the first repeating units are derived from one or more (C₈-C₁₅)alkyl(meth)acrylate, the second repeating units are derived from methyl acrylate and/or methyl methacrylate, and the third repeating units are derived from one or more (C₁₆-C₂₄)alkyl(meth)acrylate.

19. A method for improving the viscosity index of a hydraulic fluid, which comprises: adding to the hydraulic fluid from about 2 weight percent to about 20 weight percent, based on the weight of the hydraulic fluid, of a copolymer as claimed in any of claims 1 to 18.

20. A method for improving the viscosity index of a hydraulic fluid, which comprises: adding to the hydraulic fluid from about 2 weight percent to about 20 weight percent, based on the weight of the hydraulic fluid, of a polymeric additive comprising 100 mole percent repeating units of the structural formula: 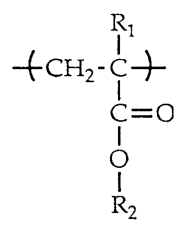 wherein each occurrence of R₁ is independently H or methyl, and each occurrence of R₂ is independently selected from the group consisting of (C₈-C₁₅)alkyl.

21. A viscosity index improving composition for hydraulic fluids, comprising about 100 parts by weight of a copolymer as claimed in any of claims 1 to 18, and from about 25 to about 250 parts by weight of a hydrocarbon diluent.

22. A hydraulic fluid composition, which comprises a hydraulic fluid base oil, and from about 2 weight percent to about 20 weight percent, based on the weight of the hydraulic fluid, of a copolymer as claimed in any of claims 1 to 18 or of a polymeric additive as defined in claim 20.

23. A hydraulic fluid composition, comprising a hydraulic fluid base oil and from about 2 weight percent to about 20 weight percent, based on the weight of the hydraulic fluid base oil, poly(lauryl methacrylate) homopolymer.

24. Use of a copolymer as claimed in any of claims 1 to 18, a copolymer as defined in claim 20, or a composition as claimed in claim 21, to improve the viscosity index of a hydraulic fluid.
